# EUROPÄISCHE PATENTSCHRIFT

(11) **EP 3 003 926 B1**
(45) Veröffentlichungstag und Bekanntmachung des Hinweises auf die Patenterteilung: **12.04.2017**
(21) Anmeldenummer: 14724099.8
(22) Anmeldetag: 16.05.2014
(51) Int. Cl.: B65G 45/22, B65G 45/24, B65G 54/02

(54) **LINEARTRANSPORTEUR MIT EINER REINIGUNGSEINHEIT**
LINEAR CONVEYOR WITH A CLEANING UNIT
TRANSPORTEUR LINÉAIRE AVEC UNE UNITÉ DE NETTOYAGE

(30) Priorität: 27.05.2013 DE 102013105430
(43) Veröffentlichungstag der Anmeldung: 13.04.2016
(73) Patentinhaber: KHS GmbH, 44143 Dortmund (DE)
(72) Erfinder: LELIE, Thomas, 47533 Kleve (DE); EHMER, Wilfried, 44227 Dortmund (DE)
(86) Internationale Anmeldenummer: PCT/EP2014/060064
(87) Internationale Veröffentlichungsnummer: WO 2014/191229

(56) Entgegenhaltungen:
- DE-A1- 4 405 413
- JP-A- H 101 046
- US-A- 1 697 712
- US-A- 2 915 019
- US-A- 3 786 779
- US-A1- 2003 230 941
- US-A1- 2004 046 068

## Beschreibung

Die Erfindung bezieht sich auf einen Lineartransporteur in der Ausgestaltung als elektromagnetischer Direktantrieb mit einer Bewegungsbahn an welcher zumindest ein, bevorzugt mehrere Bewegungselemente individuell ansteuerbar umlaufen.

Solche elektromagnetischen Direktantriebe können zum Beispiel an Verpackungsmaschinen für Behälter eingesetzt werden und unterschiedlichste Verpackungsschritte übernehmen. Entlang der Verpackungsmaschine können aus einem breiten Behälterstrom mittels Gassenteilung Behälter in mehrere einspurige Behälterströme umgewandelt werden, und mit mindestens einer Abteil und/oder Verdichtereinheit zum Abteilen und Verdichten einer vorbestimmten Anzahl an Behältern, verdichtete oder formierte Behältergruppen bzw. Teilgebinde gebildet und nachfolgend jeweils zu einem späteren Gebinde zusammengefasst werden.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten aber auch zur Aufnahme von Lebensmitteln geeignet sind, aber auch bereits zu Gruppen (Mehrfachpack, Gebinde) zusammen gefasste Behälter.

Im Detail erfolgt die Herstellung der Gebinde z.B. in einer so genannten Verpackungsmaschine in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen können. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Dabei können die einzelnen Behälter nach markanten Gestaltungsmerkmalen ausgerichtet werden, so dass die jeweiligen Gebinde je nach den jeweiligen Bedürfnissen orientierte Behälter aufweisen. Möglich ist, die einzelnen Behälter des Gebindes miteinander zu verbinden, wobei z.B. eine Umschlingung z.B. mit einem Halteband oder einem anderen umfassenden Element denkbar ist. Ein solches umfassendes Element kann zum Beispiel ein Kartonzuschnitt oder ein Folienabschnitt sein, welcher um das betreffliche Gebinde gelegt und entsprechend befestigt wird. Die Kartonenden können miteinander verklebt werden. In einem Schrumpftunnel können die zunächst anliegenden Folien aufgeschrumpft werden. Denkbar ist auch, dass die Gebinde eine stabilisierende Unterlage bekommen, welche z.B. als Kartonzuschnitt ausgeführt ist, auf welcher die Behälter aufstehen. Eine solche Unterlage ist sinnvoll, wenn das spätere Gebinde z.B. aus mehreren Lagen von Teilgebinden gebildet werden soll. Dabei kann an der Unterlage angegriffen werden, so dass das eine Teilgebinde auf das andere gesetzt wird. Anschließend kann ein umfassendes Element vorgesehen werden, um die gestapelten Gebinde zu umfassen. Die Kartonzuschnitte werden als solche bevorzugt im entfalteten Zustand aus einem Magazin entnommen und können vor oder nach Zuführung zu dem späteren Gebinde gefalten werden, wobei eine entsprechend ausgeführte Faltstation Einsatz findet. Zur Bildung der Folienabschnitte wird eine Folienrolle zu einer Folienbahn entrollt, wobei die betrefflichen Folienabschnitte von der Folienbahn abgeschnitten werden. Hierzu ist eine Folienschneidstation sinnvoll einsetzbar, so dass der jeweilige Folienabschnitt die geforderten Dimensionen des jeweils zu verpackenden Gebindes hat. In einer weiteren Ausführung kann zwischen den Behältern der späteren Gebinde ein Abstandselement angeordnet werden, welches z.B. als Steg oder beispielsweise als Gefache ausgeführt ist. Dieses Gefache ist zumeist aus einem Karton gebildet, und wird vor dem Einsetzen in das spätere Gebinde aufgefacht, wobei ein Abstandselementeinsetzer, welcher beispielhaft als Stegeinsetzer oder Gefacheeinsetzer bezeichnet werden kann, Verwendung findet. Ist das Gebinde gebildet und hat gegebenenfalls den Schrumpftunnel verlassen, kann ein Packrouter zur Neuorientierung des Gebindes vorgesehen sein.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls, Behälter mit einem Klebemittel zu versehen, wobei aber zudem noch eine Schrumpffolie um das Flaschenpaket angeordnet wird.

Aus der EP 2 500 296 A1 ist eine Vorrichtung und ein Verfahren zum Gruppieren von Stückgut entlang einer Förderstrecke bekannt. Mittels in den Förderstrom eingreifenden Einteilerelementen werden Lücken zwischen einander folgenden Stückgütern ausgebildet. Die Einteilerelemente sind in ihrer Vorschubbewegung und/oder -geschwindigkeit wegen der verwendeten getriebelosen Direktantriebe entlang der Bewegungsbahn individuell steuerbar. Die Einteilerelemente tauchen von unterhalb der Bewegungsbahn auf, teilen ein Anzahl an Behältern von dem Behälterstrom ab, halten den Behälterstrom zunächst auf, so dass zu den abgetrennten Behältern eine Lücke entsteht: Die Einteilerelemente beschleunigen dann und tauchen wieder unter das Niveau der Bewegungsbahn. Insofern kombiniert die EP 2 500 296 A1 die vor deren Anmelde- bzw. Prioritätstag bekannte Einteiltechnik mit Einteilfingern, die auf umlaufenden Balken angeordnet sind, mit einem Antriebssystem, welches durch getriebelose Direktantriebe gebildet ist.

Die DE 10 2011 081 705 A1 beschäftigt sich ebenfalls mit einem Verfahren und einer Vorrichtung zum Gruppieren von Behältern. Dabei weist die Vorrichtung zwei Fördereinrichtungen mit unterschiedlichen Geschwindigkeiten auf. Die zweite Fördereinrichtung ist schneller, als die erste Fördereinrichtung. So werden die, die zweite Fördereinrichtung erreichenden Behälter schneller bewegt als die Behälter auf der zweiten Fördereinrichtung. So entsteht zwischen den Behältern auf der zweiten Fördereinrichtung eine Lücke. Mittels einer Schiebe- oder Rückhalteeinrichtung werden die Behälter auf der zweiten Fördereinrichtung beschleunigt, verzögert und/oder gegeneinander verschoben, so dass die ursprüngliche Lücke verändert ist. Dabei wird z.B. der nacheilende Behälter auf den voreilenden Behälter geschoben. Die entsprechende Beschleunigung wird mittels linearmotorischer Antriebe erreicht, wobei die einzelnen Elemente der Schiebe- oder Rückhalteeinrichtung individuell steuerbar sind.

Elektromagnetische Direktantriebe können mit an ihren Bewegungselementen angeordneten Funktionswerkzeugen entsprechenden Komponenten der Verpackungsmaschine zugeordnet sein. So kann z.B. vorgesehen sein, dass die Bewegungselemente den zutransport von Folienzuschnitten, mit welchen die Gebinde eingehüllt werden ausführen. Denkbar ist auch, wenn die Bewegungselemente entlang eines Transferblechs angeordnet sind, um die betrefflichen Gebinde entsprechen transportieren zu können. Auch kann ein elektromagnetischer Direktantrieb mit seinen Bewegungselementen beispielsweise Transportaufgaben in einem Schrumpftunnel ausführen. Die in der Verpackungsmaschine eingesetzten elektromagnetischen Direktantriebe bedürfen der Reinigung und/oder der Versorgung mit Betriebsmedien. Insbesondere eine Reinigung beispielsweise der Bewegungsbahn wird unter Abschaltung des elektromagnetischen Direktantriebes und damit der damit zusammenhängenden Verpackungsmaschinenkomponente, also der gesamten Verpackungsmaschine erreicht. Eine Abschaltung z.B. lediglich zu Reinigungszwecken bedeutet aber einen hohen Einschnitt der eigentlich erreichbaren Leistung der beispielhaften Verpackungsmaschine.

Aufgabe der Erfindung ist es, einen Lineartransporteur als elektromagnetischen Direktantrieb vorzustellen, welcher trotz der notwendigen Reinigung ein Abschalten der damit zusammenhängenden Anlagenkomponente vermeiden kann.

Zur Lösung dieser Aufgabe ist ein Lineartransporteur entsprechend dem Patentanspruch 1 vorgesehen.

Weiterbildungen, Vorteile und Anwendungsmöglichkeiten der Erfindung ergeben sich auch aus der nachfolgenden Beschreibung von Ausführungsbeispielen. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Erfindungsgemäß wird ein Lineartransporteur in der Ausgestaltung als elektromagnetischer Direktantrieb mit einer Umlaufbahn an welcher zumindest ein, bevorzugt mehrere Bewegungselemente individuell ansteuerbar umlaufen vorgestellt, wobei zumindest eines der Bewegungselemente zielführend zumindest eine Reinigungseinheit aufweist.

Der Lineartransporteur, also der elektromagnetische Direktantrieb, weist also eine geschlossene Bewegungsbahn auf, an welcher die einzelnen Bewegungselemente angeordnet sind, welche umlaufen. Die Bewegungselemente sind individuell ansteuerbar, so dass jedes Bewegungselement eine jeweilige Geschwindigkeit haben kann. An einem Hintrum der Bewegungsbahn ist die Geschwindigkeit der dort befindlichen Bewegungselemente zweckmäßig ungleich zu Bewegungselementen entlang eines Rücktrums. Dies ist vorteilhaft, da so eine sehr geringe Anzahl an Bewegungselementen vorgesehen werden kann, da die sich entlang des Rücktrums bewegenden Bewegungselemente die sich entlang des Hintrums bewegenden Bewegungselemente überholen. Die Bewegungselemente können Funktionselemente tragen, so dass jeweils ein Teilbereich der Verpackungsmaschine funktionsmäßig von dem Lineartransporteur abgedeckt ist. Beispielsweise kann das Bewegungselement Funktionselemente tragen, so dass ein Folienzuschnitt dem Gebinde zuführbar ist.

Die Bewegungsbahn kann selbstverständlich eine Schleuse zum Ausschleusen nicht benötigter oder zu überprüfender Bewegungselemente aufweisen. Die Schleuse kann selbstverständlich auch zum Einschleusen genutzt werden.

Der Lineartransporteur, also der elektromagnetische Direktantrieb ist in der Art einer elektromagnetischen Bahn ausgeführt, wobei die Bewegungselemente getriebelos an dieser direkt ansteuerbar umlaufen, wobei die jeweils gewünschte Geschwindigkeit des jeweiligen Bewegungselementes individuell ansteuerbar ist. Dazu ist eine Schnittstelle der Bewegungsbahn mit einer Steuereinheit verbindbar.

Zumindest zum Reinigen ist das Bewegungselement mit der Reinigungseinheit vorgesehen. Das Bewegungselement kann dabei lediglich die Funktion des Reinigens ausführen, weist also keine weiteren Funktionselemente wie die anderen umlaufenden Bewegungselemente auf. Möglich ist dabei, wenn das Bewegungselement mit der Reinigungseinheit ständig mit den anderen Bewegungselementen individuell angesteuert umläuft. Dies ist möglich, da das betreffliche Bewegungselement so ansteuerbar ist, dass die Wirkungsweise der Bewegungselemente mit den daran angeordneten Funktionselementen nicht beeinflusst wird. Möglich ist aber auch, dass eines der Bewegungselemente zusätzlich zu den betrefflichen Funktionselementen noch die Reinigungseinheit aufweist. Dabei hat das bestimmte Bewegungselement eine Doppelfunktion, nämlich die Funktion des Reinigens und die Funktion der Verpackungsmaschinenkomponente, welche auch die anderen Bewegungselemente ohne Reinigungseinheit haben.

Anstatt der Möglichkeit, dass das Bewegungselement mit der Reinigungseinheit ständig mit den anderen Bewegungselementen umläuft, kann das Bewegungselement mit der Reinigungseinheit in vorgegebenen Zeitabständen oder zu gewünschter Zeit auch über die optionale Schleuse eingeschleust werden, und nach erfolgter Reinigung natürlich wieder ausgeschleust werden. So ist das Bewegungselement mit der Reinigungseinheit nicht ständig in der Bewegungsbahn umlaufend angeordnet, sondern kann die Reinigungsaufgabe zyklisch entweder in vorgegebenen Zeitabständen, oder zu individuell gewünschter oder individuell erforderlicher Zeit durchführen.

Erfindungsgemäss weist das Bewegungselement mit der Reinigungseinheit ein Speichermedium für beispielsweise liquide Medien, also bevorzugt einen Tank für die Reinigungsflüssigkeit auf. So kann das Bewegungselement mit der Reinigungseinheit autark mit dem Reinigungsmedium umlaufen. Bevorzugt ist dabei, wenn eine zentrale Füllstation vorgesehen ist, welche beispielsweise an zentraler Stelle angeordnet ist. Dabei kann die Füllstation außerhalb der Bewegungsbahn angeordnet sein, wobei das betreffliche Bewegungselement über die optionale Schleuse ausgeschleust werden könnte, um die Füllstation zu erreichen. Dies kann gleichzeitig die Warteposition des Bewegungselementes sein, von welcher ein Einschleusen über die optionale Schleuse erfolgen kann. Das Speichermedium kann auch abnehmbar ausgeführt sein, so dass dieses ohne das Bewegungselement gesondert verfahren zu müssen gefüllt werden kann.

Möglich ist aber auch, wenn entlang der Bewegungsbahn und/oder an einem bestimmten Ort der Bewegungsbahn eine Einfüllstation angeordnet ist. Dabei kann sich die Einfüllstation entweder als Leitung über die gesamte Bewegungsbahn erstrecken, oder stationär an einem zentralen Ort angeordnet sein. Möglich ist eine manuelles und/oder ein automatisches einfüllen des liquiden Mediums in das Speichermedium.

In günstiger Ausgestaltung weist das Speichermedium eine Einfüllöffnung auf, durch welche das Reinigungsmedium in das Speichermedium gelangt. Um ein Austreten von Reinigungsflüssigkeit über die Einfüllöffnung zu vermeiden, weist diese ein entsprechendes Ventil auf, welches zwar ein einfüllen zulässt, aber ein Austreten von Flüssigkeit vermeidet. In bevorzugter Ausgestaltung wird das Reinigungsmedium in das Speichermedium eingespritzt. Dabei in kurzer Zeit eine relativ hohe Menge eingefüllt werden, wozu das Einfüllen, also das Einspritzen unter Hochdruck möglich ist. Selbstverständlich ist der Einfüllprozess steuerbar, wobei die verbrauchte Menge aufgenommen wurde und die erforderliche, einzufüllende Menge entsprechend angesteuert wird.

Die Reinigungseinheit kann im Sinne der Erfindung auch eine Betriebsmedieneinheit umfassen. Diese kann in der Reinigungseinheit integriert sein, oder als separate Einheit an dem Bewegungselement angeordnet sein. Möglich ist auch, ein Bewegungselement mit der Betriebsmedieneinheit, und ein anderes Bewegungselement mit der Reinigungseinheit auszuführen. Beide Bewegungselemente können zudem die zuvor erwähnten Funktionselemente aufweisen.

An dem betrefflichen Bewegungselement kann das jeweilige Medium aus dem jeweiligen Speichermedium schwerkraftbedingt, fliehkraftbedingt oder anderweitig, bevorzugt über eine Pumpe angetrieben zu der jeweiligen Verbrauchstelle geführt werden. Dabei kann ein in allen Richtungen beweglicher und ansteuerbarer Sprühkopf über eine in oder an dem Bewegungselement angeordnete Leitung mit dem Speichermedium in Verbindung stehen, so dass alle gewünschten Stellen mit dem jeweiligen Medium, also mit der Reinigungsflüssigkeit und/oder mit dem Betriebsmedium erreichbar sind. Möglich ist aber auch, lediglich die Bewegungsbahn zu reinigen, wozu entsprechende Öffnungen oder Sprühöffnungen an einer zur Bewegungsbahn orientierten Innenfläche des Bewegungselementes vorgesehen sind. Die Öffnungen stehen natürlich mit der oder den Leitungen in Verbindung. Zudem können bevorzugt steuerbare Drosselelemente vorgesehen werden, so dass der Druck der Reinigungsflüssigkeit separat ansteuerbar, also anpassbar ist. Möglich ist auch ein Wischelement z.B. als Schwamm oder Filzelement vorzusehen, welches gegebenenfalls befeuchtet wird. dabei kann das Wischelement über Leitungen mit den Tank in Verbindung stehen. Möglich ist aber auch auf einen Tank zu verzichten und das Wischelement an zentraler Position, z.B. in der Warteposition zu befeuchten. Die Reinigungseinheit kann den gesamten Lineartransporteur, also den kompletten elektromagnetischen Direktantrieb reinigen, wobei nicht nur die Bewegungsbahn, sondern auch eine möglicherweise davon getrennte Geberabtastung reinigbar ist.

Das Bewegungselement kann zudem eine Trocknungseinheit oder auch einfach ein Trockenreinigungselement aufweisen, wenn auf eine Reinigungsflüssigkeit verzichtet werden soll. Die Trocknungseinheit kann einen unter Druck stehenden Luft- oder Gasstrom erzeugen, und so die z.B. mit der Reinigungsflüssigkeit benetzten Elemente trocknen. Dabei kann ein Saugluft- oder -gasstrom ebenso wie ein Druckluft- oder -gasstrom erzeugt werden. Der unter Druck stehende Luft- oder Gasstrom kann natürlich auch noch eine Reinigungsfunktion übernehmen. Möglich ist auch eine Wischlippe vorzusehen, welche bevorzugt an dem Bewegungselement angeordnet an der Bewegungsbahn anliegt, und so die benetzende Flüssigkeit abstreift.

Zweckmäßig ist, wenn die Reinigungsflüssigkeit in Bewegungsrichtung des Bewegungselementes gesehen vorne aufgetragen wird, wobei die Trocknung in Bewegungsrichtung gesehen hinten durchgeführt wird.

Selbstverständlich kann jeweils ein separates Bewegungselement die zuvor genannten Komponenten jeweils separat aufweisen. Möglich sind aber auch Kombinationen einzelner Komponenten mit anderen Komponenten an einem Bewegungselement, wobei natürlich auch alle genannten Komponenten an dem Bewegungselement angeordnet sein können.

Die Erfindung wird im Folgenden anhand der Figuren an einem Ausführungsbeispiel näher erläutert. Es zeigen:
- Fig. 1: einen elektromagnetischen Direktantrieb mit umlaufenden Bewegungselementen,
- Fig. 2: den elektromagnetischen Direktantrieb aus Figur 1 wobei eines der umlaufenden Bewegungselemente eine Mehrfachfunktion hat,
- Fig. 3: das Bewegungselement mit einer Mehrfachfunktion als Einzelheit in prinzipieller Ansicht, und
- Fig. 4: das Bewegungselement mit einer Mehrfachfunktion in einer alternativen Ausführungsform in einer alternativen Ansicht.

In den unterschiedlichen Figuren sind gleiche Teile stets mit denselben Bezugszeichen versehen, weswegen diese in der Regel auch nur einmal beschrieben werden.

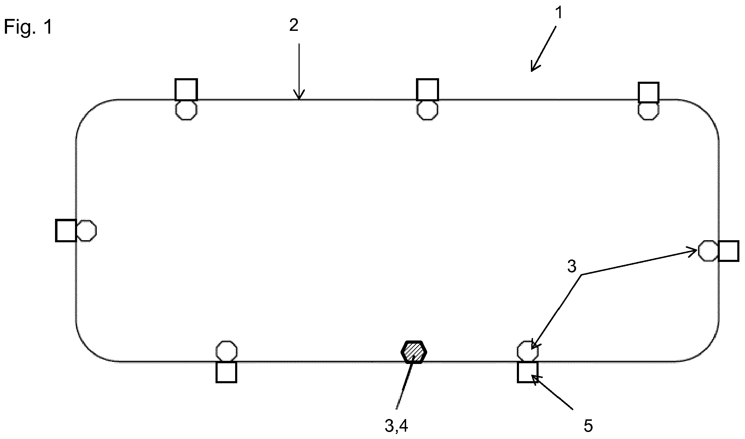

Figur 1 zeigt einen Lineartransporteur 1 in der Ausgestaltung als elektromagnetischen Direktantrieb 1 mit einer Bewegungsbahn 2 an welcher zumindest ein, bevorzugt mehrere Bewegungselemente 3 individuell ansteuerbar umlaufen. Zumindest eines der Bewegungselemente 3 weist zumindest eine Reinigungseinheit 4 auf.

Bei dem Ausführungsbeispiel nach Figur 1 tragen die Bewegungselemente 3 entweder die Reinigungseinheit 4 oder Funktionselemente 5. Die Funktionselemente 5 sind in ihrer Ausgestaltung und Funktion an eine Teilkomponente beispielsweise einer Verpackungsmaschine angepasst. So können die Funktionselemente bspw. dazu dienen, Greif- oder Schubaufgaben im Zusammenhang mit zu transportierenden oder zu behandelnden Produkten, Behältern oder Gebinden zu erfüllen..

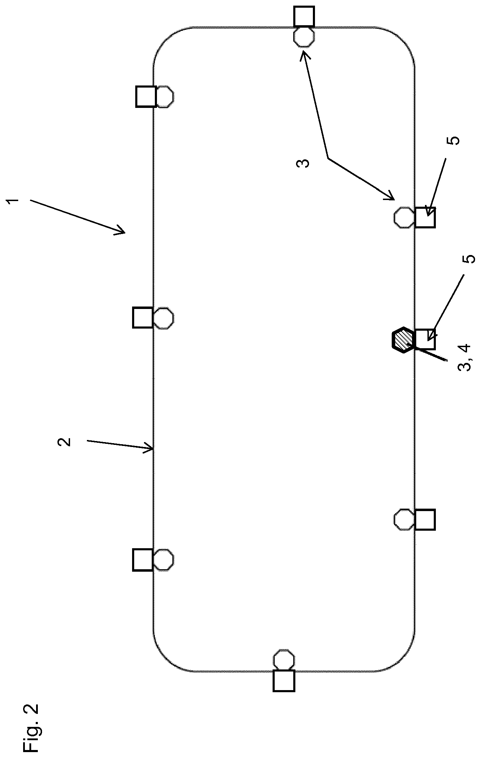

Bei dem in Figur 2 dargestellten Ausführungsbeispiel weist eines der Bewegungselemente 3 zusätzlich zum Funktionselement 5 die Reinigungseinheit 4, so dass das betreffliche Bewegungselement 3 eine Mehrfachfunktion hat. Die anderen Bewegungselemente 3 weisen jeweils das Funktionselement 5 auf. Alternativ könnte das Funktionselement 5 auch durch die Reinigungseinheit 4 ersetzt werden, bzw. das Bewegungselement 3 als Reinigungselement oder Reinigungsschlitten insgesamt ausformt werden. In diesem Fall würde ein solches Reinigungselement oder Reinigungsschlitten bedarfsweise eingesetzt werden, auf einer Parkposition kommend oder funktionslos umlaufen, bis eine Reinigungsfunktion veranlasst wird.

Die Reinigungseinheit 4 ist im Sinne der Erfindung so zu verstehen, dass diese ein Reinigungsmedium und/oder ein Betriebsmedium mit sich führen kann. Das Reinigungsmedium kann eine Reinigungsflüssigkeit sein, wobei das Betriebsmedium beispielsweise ein tensidhaltiges oder leichtflüchtiges Fluid, Gase oder ein dampfförmiges Medium sein. Zudem kann die Reinigungseinheit 4 noch ein Trockenreinigungselement 6 aufweisen, so dass zusätzlich oder anstelle eines Reinigungsfluides beispielsweise Bürsten, Stoffwalzen oder dergleichen vorgesehen sein können. Zudem kann die Reinigungseinheit 4 noch eine Trocknungseinheit aufweisen, welche die Reinigungsflüssigkeit z.B. von der gereinigten Bewegungsbahn 2 entfernt. Die Trocknungseinheit in mechanischer Hinsicht als Abstreifer, z.B. in der
Ausgestaltung als Wischlippe ausgeführt sein. Die Trocknungseinheit kann aber auch Luft unter Druckwirkung und zwar entweder als Saugluft oder als Druckluft erzeugen, so dass die Reinigungsflüssigkeit entweder abgesaugt oder abgeblasen wird.

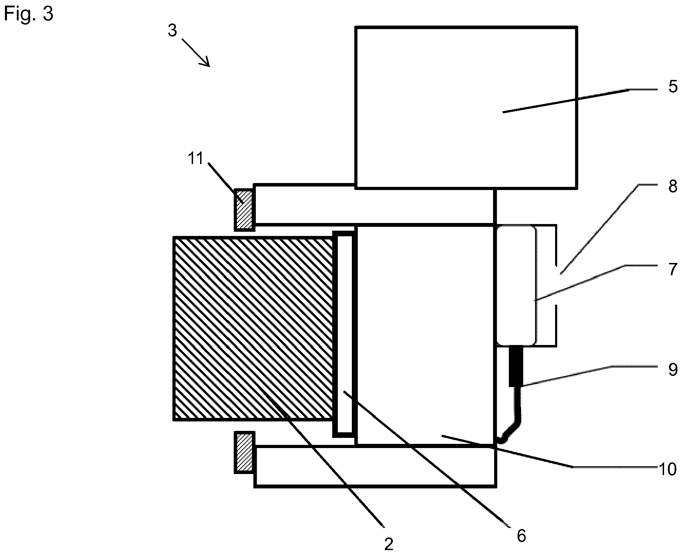

Figur 3 zeigt ein Bewegungselement 3 welches die Funktionseinheit 5 und die Reinigungseinheit 4 aufweist. Das Bewegungselement 3 umgreift die Bewegungsbahn 2, welche auch als Geberbahn bezeichnet werden kann. Das Bewegungselement 3 weist in der gewählten Darstellung nach Figur 3 gegenüber zur Bewegungsbahn 2 ein Speichermedium 7 bevorzugt für liquide Medien, also für die Reinigungsflüssigkeit oder für eine Betriebsflüssigkeit auf. Möglich ist ein zweites
Speichermedium vorzusehen, wenn sowohl Reinigungsflüssigkeit als auch Betriebsflüssigkeit an dem Bewegungselement 3 mitgeführt werden sollen. In dem dargestellten Ausführungsbeispiel weist die Reinigungseinheit 4 noch das Trockenreinigungselement 6 auf, so dass eine Reinigung mit Reinigungsflüssigkeit als auch eine Reinigung ohne Flüssigkeit möglich ist. Nicht dargestellt ist in Figur 3 eine Trocknungseinheit.

Das Speichermedium 7 kann bevorzugt als Tank ausgeführt sein, welcher eine Einfüllöffnung 8 aufweist. Aus dem Speichermedium 7 führt eine Leitung 9 zu nicht dargestellten Verbrauchern, also zum Beispiel zu einem Sprühkopf zum Reinigen.

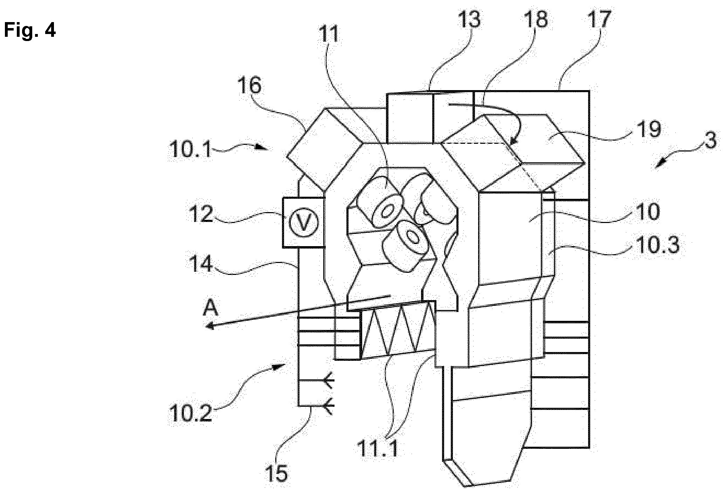

Figur 4 zeigt ein weiteres Ausführungsbeispiel anhand eines Bewegungselementes 3, wie es bspw. in seiner Grundform, d.h. nur der Schlitten, Mover ohne weitere Aufbauten, vermarktet wird, wobei die Führungsschiene oder Leiterbahn in der Figur 4 nicht dargestellt ist. Der Pfeil A deutet die Hauptbewegungsrichtung an, wobei das Bewegungselement 3 grundsätzlich aber in beide Fahrtrichtungen verfahren werden kann. Die Anordnung und Art der Moverführung bzw. die Bauform des Movers ist abhängig von der jeweiligen Schienen- und Führungsbahn bzw. den Lastverhältnissen und kann bedarfsweise angepasst bzw. unterschiedlich ausgeführt werden.

Der Grundkörper 10 weist einen Medienabschnitt 10.1, einen in Fahrtrichtung vorne liegenden Aufgabeabschnitt 10.2 und einen in Fahrtrichtung hinten liegenden Ableitabschnitt 10.3 auf, diese im Wesentlichen bilden die Reinigungseinheit 4. Die Laufrollen 11 sind derart auf der Laufschiene angeordnet, dass das Bewegungselement 3 spielfrei bewegt werden kann, mittels der elektromagnetischen Kraft, die auf die Permanentmagnete 11.1 wirkt, wird das Bewegungselement 3 angetrieben.

Der Aufgabeabschitt 10.2 wird durch die Düsen oder Auslässe 15 bestimmt, die über eine Pumpe 12 und eine oder mehrere Leitungen 14 mit einem im Medienabschnitt angeordneten Tank 10 in Verbindung steht. Die Düsen oder Auslässe 15 sind dabei derart ausgerichtet, dass ein flüssiges, dampf- oder gasförmiges Medium auf die Führungsschiene oder Laufbahn. Ergänzend kann es sinnvoll sein, auch den Innenbereich des Bewegungselementes 3 fluidisch anzuströmen.

Der Ableitabschnitt 10.3 wird bestimmt durch Mittel zum Absaugen oder Aufnehmen der Fluide bzw. von gelösten Staub- und Schmutzpartikeln. Hierfür ist im gezeigten Ausführungsbeispiel ein Leitung 17 vorgesehen, die in eine Mehrzahl von Teilleitungen verzweigt, die in nicht dargestellt Saugöffnungen oder -düsen enden, welche zu o.g. Aufnahmen der Fluide bzw. von gelösten Staub- und Schmutzpartikeln geeignet sind. Die Leitung 17 steht hierzu wiederum mit einem Kompressor 13 in Verbindung, welcher die aufgenommenen Stoffe über eine Leitung 18 an einen Tank 16 weiterleitet und dort sammelt. Wie vorstehend beschrieben, kann es vorteilhaftsein, eine Wischlippe vorzusehen. Düsen oder Auslässe 15 bzw. die Leitung 17 sowie deren Verzweigung ist nur je einseitig dargestellt, wird aber im Regelfall jeweils beidseitig links und rechts an dem Bewegungselement 3 angeordnet werden.

Weiterhin ist je nach zu erwartender Verschmutzung auch nur ein Teil der Elemente vorzusehen. Das heißt, es kann ausreichend sein, nur den Aufgabeabschnitt 10.2 vorzusehen, wenn ggf. eine leichtflüchtige Reinigungsflüssigkeit oder eine Gas zum Reinigen genutzt wird und diese für die zur erwartende Verschmutzung hinreichend ist. Dazu oder weiterhin könnte der Tank 16 als Drucktank ausgebildet sein, der bedarfsweise gefüllt und vorgespannt wird, so dass Anstelle der Pumpe 12 ein ggf. steuerbares Entspannungsventil vorzusehen ist.

Alternativ könnte der Aufgabeabschnitt 10.2 insbesondere einen Kompressor umfassen, der über einen Feinfilter ausschließlich Raumluft ansaugt oder zusätzlich zur Fluidmenge aus dem Tank 16, einen Gasvolumenstrom aus der Raumluft ansaugt.

Weiterhin könnte ein Reinigungsfluid auch lediglich in geeigneter Weise nach Außen abgeleitet werden, ohne diese gemeinsam mit den aufgenommenen Schmutz- und Staubpartikeln in einen mitgeführten Sammeltank zu leiten.

Alternativ kann das Bewegungselement auch mittels flexibler Zu- und Ableitungen an zentralen Funktions- oder Versorgungseinheiten verbunden werden oder sich bedarfsweise mit diesen über Schnellkupplungen verbinden, sofern die räumlichen Gegebenheiten dies erlauben.

Zu betonen ist, dass alle vorgenannten Elemente zur Fluidaufgabe, - abgabe, -ableitung oder -sammlung bedarfsweise, je nach Reinigungsaufgabe kombiniert und angepasst werden können.

### Bezugszeichenliste

- 1: Lineartransporteur
- 2: Bewegungsbahn
- 3: Bewegungselemente
- 4: Reinigungseinheit
- 5: Funktionselement
- 6: Trockenreinigungselement
- 7: Speichermedium
- 8: Einfüllöffnung
- 9: Leitung
- 10: Grundkörper
10.1 Medienabschnitt
10.2 Aufgabeabschnitt
10.3 Ableitabschnitt
- 11: Laufrolle
- 12: Pumpe
- 13: Kompressor
- 14: Leitung
- 15: Düse oder Auslass
- 16: Tank
- 17: Leitung
- 18: Leitung
- 19: Tank

## Patentansprüche

1. Lineartransporteur in der Ausgestaltung als elektromagnetischer Direktantrieb (1) mit einer Bewegungsbahn (2) an welcher zumindest ein, bevorzugt mehrere Bewegungselemente (3) individuell ansteuerbar umlaufen, wobei zumindest eines der Bewegungselemente (3) in Form eines Transportschlittens oder Transportwagens (Mover) für den Lineartransporteur vorliegt, wobei das
Bewegungselement (3) zumindest eine Reinigungseinheit (4) aufweist oder als eine solche ausgebildet ist, und zwar zum Reinigen der Bewegungsbahn (2), **dadurch gekennzeichnet, dass**
die Reinigungseinheit (4) ein Speichermedium (7) für Fluide, insbesondere liquide Medien aufweist.

2. Lineartransporteur nach Anspruch 1, **dadurch gekennzeichnet, dass** das Bewegungselement (3) zumindest ein Funktionselement (5) aufweist.

3. Lineartransporteur nach einem der vorhergehenden Ansprüche, **dadurch gekennzeichnet, dass** die Reinigungseinheit (4) einen Sprühkopf oder -düse aufweist oder hiermit verbunden ist.

4. Lineartransporteur nach einem der vorhergehenden Ansprüche, **dadurch gekennzeichnet, dass** die Reinigungseinheit (4) ein Trockenreinigungselement (6) aufweist.

5. Lineartransporteur nach einem der vorhergehenden Ansprüche, **dadurch gekennzeichnet, dass** dieser mindestens eine Pumpe und/oder mindestens eine Vakuumpumpe bzw. Vakuumkompressor umfasst.

6. Verfahren zum Reinigen eines Lineartransporteurs (1) nach einem der vorgehenden Ansprüche, wobei das Bewegungselement (3) mit der Reinigungseinheit (4) entweder ständig mit den anderen Bewegungselementen (3) umläuft oder zu vorgebbaren oder erforderlichen Zeitpunkten in die Bewegungsbahn (2) eingeführt wird, und sodann mit den anderen Bewegungselementen (3) umläuft.

## Claims

1. Linear drive in the form of an electromagnetic direct drive (1), having a path of movement (2) on which at least one, and preferably a plurality, of mobile elements (3) circulate and can be individually controlled, wherein at least one of the mobile elements (3) is provided in the form of a transport slide or transport carriage (mover) for the linear drive, wherein the mobile element (3) comprises at least one cleaning unit (4) or is configured as such, and specifically for the cleaning of the movement path (2), **characterised in that**
the cleaning unit (4) comprises a storage medium (7) for fluids, in particular liquid media.

2. Linear drive according to claim 1, **characterised in that** the mobile element (3) comprises at least one function element (5).

3. Linear drive according to any one of the preceding claims, **characterised in that** the cleaning unit (4) comprises a spray head or spray nozzle, or is connected to such.

4. Linear driver according to any one of the preceding claims, **characterised in that** the cleaning unit (4) comprises a dry cleaning element (6).

5. Linear drive according to any one of the preceding claims, **characterised in that** it comprises at least one pump and/or at least one vacuum pump or vacuum compressor respectively.

6. Method for cleaning a linear drive (1) according to any one of the preceding claims, wherein the mobile element (3) with the cleaning unit (4) either constantly circulates with the other mobile elements (3) or, at points of time which can be predetermined or are required, is introduced into the path of movement (2), and then circulates with the other mobile elements (3).

## Revendications

1. Transporteur linéaire configuré sous la forme d'un entraînement direct (1) électromagnétique comprenant une voie de déplacement (2), au niveau de laquelle au moins un, de manière préférée plusieurs, éléments de déplacement (3) circulent de manière à pouvoir être pilotés individuellement, dans lequel au moins un des éléments de déplacement (3) est présent sous la forme d'un chariot de transport ou d'un véhicule de transport (Mover) pour le transporteur linéaire, dans lequel l'élément de déplacement (3) présente au moins une unité de nettoyage (4) ou est réalisé en tant que tel, et ce afin de nettoyer la voie de déplacement (2), **caractérisé en ce**
**que** l'unité de nettoyage (4) présente un milieu de stockage (7) pour des fluides, en particulier des milieux liquides.

2. Transporteur linéaire selon la revendication 1, **caractérisé en ce que** l'élément de déplacement (3) présente au moins un élément fonctionnel (5).

3. Transporteur linéaire selon l'une quelconque des revendications précédentes, **caractérisé en ce que** l'unité de nettoyage (4) présente une tête ou une buse de pulvérisation ou est reliée à cette dernière.

4. Transporteur linéaire selon l'une quelconque des revendications précédentes, **caractérisé en ce que** l'unité de nettoyage (4) présente un élément de nettoyage à sec (6).

5. Transporteur linéaire selon l'une quelconque des revendications précédentes, **caractérisé en ce que** ledit transporteur comprend au moins une pompe et/ou au moins une pompe à vide ou un compresseur à vide.

6. Procédé servant à nettoyer un transporteur linéaire (1) selon l'une quelconque des revendications précédentes, dans lequel l'élément de déplacement (3) circule avec l'unité de nettoyage (4) soit en permanence avec les autres éléments de déplacement (3), soit est introduit dans la voie de déplacement (2) à des moments pouvant être prédéfinis ou requis, et circule dès lors avec les autres éléments de déplacement (3).
